# EUROPÄISCHE PATENTSCHRIFT

(11) **EP 4 155 176 B1**
(45) Veröffentlichungstag und Bekanntmachung des Hinweises auf die Patenterteilung: **29.05.2024**
(21) Anmeldenummer: 22195265.8
(22) Anmeldetag: 13.09.2022
(51) Int. Cl.: B62J 13/00, B62J 23/00

(54) **KETTENSTREBEN-SCHUTZELEMENT SOWIE KETTENSTREBEN-SYSTEM**
CHAIN STRUT PROTECTION ELEMENT AND CHAIN STRUT SYSTEM
ÉLÉMENT DE PROTECTION D'ENTRETOISE DE CHAÎNE ET SYSTÈME D'ENTRETOISE DE CHAÎNE

(30) Priorität: 22.09.2021 DE 202021105108 U
(43) Veröffentlichungstag der Anmeldung: 29.03.2023
(73) Patentinhaber: Canyon Bicycles GmbH, 56073 Koblenz (DE)
(72) Erfinder: Alraun, Peter, 56073 Koblenz (DE); Vogt, Stephan, 56073 Koblenz (DE)
(74) Vertreter: dompatent von Kreisler Selting Werner - Partnerschaft von Patent- und Rechtsanwälten mbB

(56) Entgegenhaltungen:
- DE-A1-102012 205 182
- JP-Y2- H0 719 969
- US-A1- 2009 295 120

## Beschreibung

Die Erfindung betrifft ein Kettenstreben-Schutzelement sowie ein Kettenstreben-System mit einem derartigen Kettenstreben-Schutzelement.

Bei Fahrrädern mit einer Kettenschaltung wird die Kette durch einen Federmechanismus am Schaltwerk gespannt. Während des Fahrens treten jedoch Erschütterungen auf, durch die die Kette bewegt wird und insbesondere zum Schwingen angeregt wird. Hierbei kann die Kette gegen die Kettenstrebe oder andere Teile des Fahrradrahmens schlagen, sodass ein Beschädigen der Fahrradkette und/oder des Fahrradrahmens auftreten kann. Derartige Bewegungen der Kette können auch durch unregelmäßige Kraftübertragungen erfolgen. Dies ist insbesondere bei Mountainbikes und dergleichen aufgrund der auftretenden Erschütterungen der Fall. Auch bei Fahrrädern mit einem gefederten Hinterbau können ähnliche Bewegungen der Kette auftreten. Beim Einfedern ändert sich bei vielen Fahrradtypen der Abstand zwischen dem Tretlager und der Hinterachse. Dies bewirkt, je nach Bewegungsrichtung des Hinterbaus, ein Strecken oder Entspannen der Kette. Derartige plötzlich auftretende Bewegungen der Kette, insbesondere ein Entspannen oder ein Spannen der Kette, führt häufig dazu, dass die Kette gegen den Fahrradrahmen, insbesondere die Kettenstrebe, schlägt. Derartige unkontrollierte Bewegungen der Kette können auch dazu führen, dass die Kette vom Kettenblatt abgeworfen wird und sich ggf. zwischen Kettenblatt und Kettenstrebe verklemmt. Dies kann nicht nur zu Beschädigungen der Kette und des Fahrradrahmens, sondern auch zum Sturz des Fahrers führen.

Zum Schutz der Kettenstrebe ist es bekannt auf der Oberseite der Kettenstrebe ein Abdeckelement anzuordnen. Dies dient gleichzeitig als Geräuschdämpfer. Insbesondere bei Kettenstreben aus Carbon sind derartige Abdeckelement erforderlich. Diese sind häufig als Kunststoffteile mit ggf. dämpfenden Eigenschaften und/oder aus gummiartigem Material ausgebildet. Ferner ist es insbesondere bei Carbonrahmen bekannt, im Bereich zwischen dem Kettenblatt und der Kettenstrebe ein ebenfalls aus Blech hergestelltes Schutzelement vorzusehen, um beim Verklemmen der Kette in diesem Bereich ein Beschädigen des Rahmens zu vermeiden.

Ein Kettenstreben-Schutzelement mit den Merkmalen des Oberbegriffs des Anspruchs 1 ist aus DE 10 2012 205 182 bekannt.

Aufgabe der Erfindung ist es ein verbessertes Kettenstreben-Schutzelement zu schaffen.

Die Lösung der Aufgabe erfolgt erfindungsgemäß durch die Merkmale des Anspruchs 1 hinsichtlich eines Kettenstreben-Schutzelement sowie durch die Merkmale des Anspruch 12 hinsichtlich eines Kettenstreben-Systems.

Das erfindungsgemäße Kettenstreben-Schutzelement dient zur Anordnung an einer Kettenstrebe eines Fahrrads. Das Kettenstreben-Schutzelement weist ein Abdeckelement auf, das in montiertem Zustand an einer Außenseite der Kettenstrebe angeordnet ist. Insbesondere ist das Abdeckelement im Bereich des Kettenblattes an der Außenseite der Kettenstrebe angeordnet. Ferner weist das Kettenstreben-Schutzelement ein Befestigungselement zum Befestigen des Kettenstreben-Schutzelements an der Kettenstrebe auf. Das Befestigungselement ist mit dem Abdeckelement verbunden oder in dieses integriert. Die Befestigung kann auch durch Verkleben erfolgen, sodass das Befestigungselement durch die Verklebung ausgebildet ist. Auch kann eine Befestigung durch ein klemmendes Befestigen, beispielweise durch ein teilweises Umgreifen eines Rahmenelements, wie einer Kettenstrebe, sowie durch Verschrauben oder dergleichen erfolgen, wobei unterschiedliche Befestigungselemente auch miteinander kombiniert werden können.

Durch das erfindungsgemäße Anordnen eines Abdeckelements an der Außenseite der Kettenstrebe im Bereich des Kettenblattes ist einerseits die Kettenstrebe in diesem Bereich geschützt, sodass bei auftretenden Bewegungen der Kette diese nicht in diesem Bereich an der Kettenstrebe schleift oder gegen diesen Bereich der Kettenstrebe schlägt und diese beschädigt. Dies ist insbesondere bei Kettenstreben aus Carbonfasern oder dergleichen äußerst relevant, um die Stabilität der Kettenstrebe sicherzustellen. Des Weiteren hat die erfindungsgemäße Anordnung eines Abdeckelements in diesem Bereich der Kettenstrebe den Vorteil, dass das Risiko des Abspringens der Kette verringert ist, da durch das Abdeckelement der Abstand zwischen Kettenplatte und Kettenstrebe verringert ist. Hierbei ist das Abdeckelement vorzugsweise zumindest teilweise in dem Zwischenraum zwischen Kettenblatt und Kettenstrebe angeordnet. Selbst wenn die Kette vom Kettenblatt abspringt, ist durch die erfindungsgemäße Anordnung des Abdeckelements die Gefahr des Verklemmens verringert und selbst beim Auftreten eines Verklemmens die Gefahr der Beschädigung der Kettenstrebe verringert. Auch ein Beschädigen der Kette selbst kann beispielsweise dadurch verringert werden, dass das Abdeckelement aus einem Material hergestellt ist, dass weicher ist als die Kette, sodass ein Beschädigen des Abdeckelements aber nicht der Kette erfolgt.

Bei dem Bereich an der Außenseite der Kettenstrebe, in dem das Abdeckelement angeordnet ist, handelt es sich vorzugsweise um den unmittelbar an das Kettenblatt angrenzenden Bereich der Kettenstrebe. Dies ist der in Draufsicht oder Seitenansicht in Fahrtrichtung unmittelbar hinter dem Kettenblatt angeordnete Bereich der Kettenstrebe. Bevorzugt ist es ferner, dass der abgedeckte Bereich in Draufsicht zumindest teilweise auch hinter dem Kettenblatt angeordnet ist, sodass das Abdeckelement insbesondere in Draufsicht hinter den Zähnen des Kettenblatts angeordnet ist. Insofern ist vorzugsweise zumindest ein Teil des Abdeckelements in montiertem Zustand zwischen dem Kettenblatt und der Kettenstrebe in Draufsicht, insbesondere im Bereich der Zähne des Kettenblatts, angeordnet.

Bevorzugt ist es ferner, dass das Abdeckelement bogenförmig ausgebildet ist, wobei es sich insbesondere um eine im Wesentlichen kreisbogenförmige Ausgestaltung handelt. Das Abdeckelement folgt somit in der Form vorzugsweise dem Bogen des Kettenblatts. Insbesondere ist die bogenförmige Ausgestaltung des Abdeckelements im Wesentlichen koaxial zum Kettenblatt. Insofern handelt es sich vorzugsweise bei dem Abdeckelement um ein ringsegmentförmiges Element dessen Mittelpunkt im Bereich des Tretlagers angeordnet ist. Selbstverständlich kann ein derartiges Ringsegment oder bogenförmiges Abdeckelement Ansätze und dergleichen aufweisen.

Des Weiteren ist es bevorzugt, dass das Abdeckelement derartige Abmessungen aufweist, dass es sich über die gesamte Höhe der Außenseite der Kettenstrebe in montiertem Zustand erstreckt. Vorzugsweise umgreift das Abdeckelement eine Unterseite und/oder eine Oberseite der Kettenstrebe zusätzlich zumindest teilweise. Hierdurch ist beispielsweise ein Verhaken der Kette im Fall des Abspringens vom Kettenblatt vermieden. Besonders bevorzugt ist es, dass im Bereich der Oberseite der Kettenstrebe das mit dem Abdeckelement verbundene Befestigungselement angeordnet ist. Vorzugsweise erfolgt die Befestigung beispielsweise mit Hilfe einer Schraube oder eines anderen Fixierelements. Besonders bevorzugt ist es, dass das Befestigungselement in unterschiedlichen Positionen mit der Kettenstrebe, insbesondere der Oberseite der Kettenstrebe verbunden werden kann. Hierzu können im Befestigungselement beispielsweise mehrere Löcher vorhanden sein, sodass das Befestigungselement und somit auch das mit diesem verbundene Abdeckelement in unterschiedlichen Positionen angeordnet werden kann. Vorzugsweise weist das Befestigungselement ein Langloch auf, sodass ein stufenfreies Verschieben des Befestigungselements und des mit diesem verbundenen Abdeckelements möglich ist. Dies hat insbesondere den Vorteil, dass die Position des Kettenstreben-Schutzelements an unterschiedlich große Kettenblätter angepasst werden kann. Dies ist beispielsweise beim Auswechseln von Kettenblättern von Vorteil.

Das Abdeckelement des erfindungsgemäßen Kettenstreben-Schutzelements weist einen Ansatz auf. Dieser umgreift in montiertem Zustand das Kettenblatt. Insbesondere werden hierbei einige Zähne des Kettenblatts umgriffen. Vorzugsweise erfolgt das Umgreifen des Kettenblatts auf Höhe der Kettenstrebe. Vorzugsweise ist dies unterhalb der Kette, d.h. unterhalb des oberen Kettentrums. Hierdurch ist beim Herunterspringen der Kette nach innen vermieden, dass sich die Kette zwischen dem Kettenblatt und dem Rahmen bzw. zwischen dem Rahmen und dem Kettenblatt und einem Teil des Kettenstreben-Schutzelements verklemmt. Vielmehr liegt die Kette insbesondere auf einer Oberseite dieses Ansatzes auf, wenn sie vom Kettenblatt abgesprungen ist.

Alternativ oder zusätzlich zu dem Vorsehen eines Ansatzes an dem Abdeckelement weist das Abdeckelement eine Nut auf, in der in montiertem Zustand die Zähne des Kettenblattes angeordnet sind bzw. durch die die Zähne beim Bewegen des Kettenblattes hindurch laufen. Dies hat denselben Effekt und weist den zusätzlichen Vorteil auf, dass auch auf der Innenseite des Kettenblattes, d. h. zwischen dem Kettenblatt und dem Rahmen, insbesondere der Kettenstrebe, ein Teil des Kettenstreben-Schutzelements angeordnet ist. Hierdurch ist die Gefahr des Verklemmens der Kette beim Abspringen zwischen dem Kettenblatt und dem Rahmen bzw. dem Kettenstreben-Schutzelement weiter verringert.

Zusätzlich kann das Kettenstreben-Schutzelement ein mit dem Abdeckelement und/oder dem Befestigungselement verbundenes Schutzelement aufweisen. Dieses Schutzelement ist auf der Oberseite der Kettenstrebe angeordnet und dient somit zum Schutz der Kettenstrebe bei einer sich bewegenden, beispielsweise schwingenden Kette. Diese schlägt sodann auf das Schutzelement und nicht auf die Oberseite der Kettenstrebe. Insbesondere erstreckt sich das Schutzelement ausgehend vom Befestigungselement und/oder Abdeckelement in Richtung eines Ausfallendes der Kettenstrebe. Vorzugsweise erstreckt sich das Schutzelement über mindestens 2/3 der Länge der Kettenstrebe ausgehend von dem Abdeckelement bzw. ausgehend vom Kettenblatt. Das Schutzelement ist vorzugsweise zusätzlich über Schrauben oder andere Fixierelemente an der Oberseite der Kettenstrebe befestigt. Bei dem Schutzelement kann es sich um ein gesondertes Element handeln, wobei das Schutzelement auch einstückig mit dem Abdeckelement und/oder dem Befestigungselement ausgebildet sein kann.

Bei einer weiteren bevorzugten Weiterbildung der Erfindung weist das Kettenstreben-Schutzelement ein Kettenführungselement auf. Dieses ist mit dem Befestigungselement und/oder dem Abdeckelement verbunden und kann wiederum auch einstückig mit diesem ausgebildet sein. Das Kettenführungselement umgreift die Kette in montiertem Zustand, insbesondere oberhalb des Kettenblattes teilweise. Vorzugsweise weist das Kettenführungselement einen Ansatz auf, der in montiertem Zustand oberhalb der Kette angeordnet ist. Der Abstand zur Kette ist hierbei derart gering, dass die Kette nicht von den Zähnen des Kettenblatts abgehoben werden kann. Ferner kann die Kettenführung auch einen Ansatz aufweisen, der an der Vorderseite bzw. Außenseite des Kettenblatts angeordnet ist, sodass ein Herunterrutschen der Kette auch nach vorne vermieden ist. Vorzugsweise ist das Kettenführungselement derart ausgebildet, dass es in unterschiedlichen Positionen angeordnet werden kann. Hierdurch ist eine Justage des Kettenführungselements möglich und insbesondere eine Anpassung der Position des Kettenführungselements beim Austausch von Kettenblättern mit unterschiedlichem Durchmesser möglich. Eine Justage kann beispielsweise über ein Langloch oder mehrere Öffnungen zur Fixierung in unterschiedlichen Positionen erfolgen.

Ferner betrifft die Erfindung ein Kettenstreben-System. Dieses umfasst eine Kettenstrebe eines Fahrrad-Hinterbaus. Ferner umfasst das System ein mit der Kettenstrebe verbundenes Kettenstreben-Schutzelement mit einem Abdeckelement und einem Befestigungselement, wie vorstehend beschrieben. Besonders bevorzugt ist das Kettenstreben-Schutzelement, wie vorstehend beschrieben, weitergebildet. Des Weiteren kann das Kettenstreben-System ein Kettenblatt umfassen, das insbesondere, wie vorstehend anhand des Kettenstreben-Schutzelements beschrieben, angeordnet ist. Zusätzlich kann das Kettenstreben-System auch eine Fahrradkette umfassen, die wiederum vorzugsweise wie vorstehend anhand des Kettenstreben-Schutzelements beschrieben, angeordnet ist.

Nachfolgend wird die Erfindung anhand bevorzugter Ausführungsformen unter Bezugnahme auf die anliegenden Zeichnungen näher beschrieben.

Es zeigen:
- Fig. 1: eine schematische perspektivische Ansicht einer ersten Ausführungsform eines Kettenstreben-Schutzelements in montiertem Zustand,
- Fig. 2: das in Figur 1 dargestellte Kettenstreben-Schutzelement in Seitenansicht in montiertem Zustand zusammen mit einem Kettenblatt,
- Fig. 3: eine perspektivische Ansicht einer zweiten Ausführungsform eines Kettenstreben-Schutzelements und
- Fig. 4: eine perspektivische Draufsicht des in Figur 3 dargestellten Kettenstreben-Schutzelements.

In den Figuren sind zwei Ausführungsformen eines Kettenstreben-Schutzelements in Verbindung mit der Kettenstrebe und ggf. auch dem Kettenblatt dargestellt, sodass auch das Kettenstreben-System dargestellt ist.

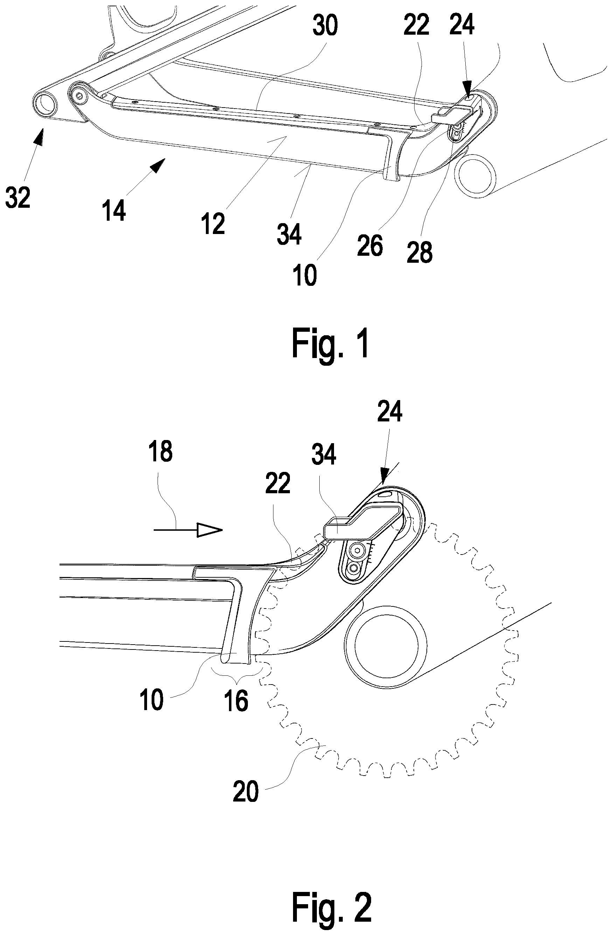

Gemäß einer ersten bevorzugten Ausführungsform (Figuren 1 und 2) weist das Kettenstreben-Schutzelement ein Abdeckelement 10 auf. Das Abdeckelement 10 ist in montiertem Zustand an einer Außenseite 12 der Kettenstrebe 14 angeordnet. Wie insbesondere aus Figur 2 ersichtlich, ist das Abdeckelement 10 in einem Bereich 16 angeordnet. Bei dem Bereich 16 handelt es sich um einen Bereich eines Kettenblattes. Im dargestellten Ausführungsbeispiel handelt es sich bei dem Bereich 16 um den sich entgegen einer Fahrtrichtung 18 an einen Umfang eines Kettenblatts 20 anschließenden Bereich. Das Abdeckelement 10 könnte auch etwas breiter oder in Fahrtrichtung etwas weiter vorne angeordnet sein, sodass dies zumindest teilweise in Draufsicht (Fig. 2) unterhalb des Kettenblattes insbesondere der Zähne des Kettenblattes 20 angeordnet ist.

Mit dem Abdeckelement 10 ist ein Befestigungselement 22 verbunden oder einstückig mit diesem ausgebildet. Das Befestigungselement 22, das an einer Oberseite der Kettenstrebe 14 angeordnet ist, kann mit Hilfe einer Schraube oder dergleichen ein Befestigen des Kettenstreben-Schutzelements an der Kettenstrebe 14 bewirken.

Des Weiteren ist im dargestellten Ausführungsbeispiel mit dem Befestigungselement 22 ein Kettenführungselement 24 verbunden. Das Kettenführungselement kann auch einstückig mit dem Befestigungselement 22 verbunden sein. Auch kann das Kettenführungselement 24 Teil des Befestigungselements 22 sein, sodass die Befestigung beispielsweise über eine Schraube 26 (Fig. 1) erfolgt. Im dargestellten Ausführungsbeispiel ist die Schraube 26 in einem Langloch angeordnet, sodass eine Justage des Kettenführungselements 24, insbesondere in vertikaler Richtung möglich ist. Dies ist insbesondere beim Austausch des Kettenblattes vorteilhaft, da somit eine Anpassung an unterschiedlich große Kettenblätter auf einfache Weise möglich ist.

Des Weiteren ist im dargestellten Ausführungsbeispiel mit dem Abdeckelement 10 bzw. dem Befestigungselement 22 ein Schutzelement 30 verbunden. Das Schutzelement 30 ist auf einer Oberseite der Kettenstrebe 14 angeordnet und umgreift die Kettenstrebe 14 im dargestellten Ausführungsbeispiel an der Außenseite 12 sowie an der gegenüberliegenden Innenseite. Das Schutzelement ist somit im Querschnitt U-förmig ausgebildet. Das Schutzelement 30 erstreckt sich im dargestellten Ausführungsbeispiel über die gesamte Länge der Kettenstrebe 12, ausgehend vom kettenblattseitigen Ende bzw. ausgehend vom Abdeckelement 10 in Richtung eines Ausfallendes 32 des Hinterbaus, der zur Aufnahme der Hinterradachse dient.

Das Kettenführungselement kann, wie insbesondere aus Figur 2 ersichtlich, derart ausgebildet sein, dass es einen Ansatz 34 aufweist, der in montierter Form das Kettenblatt 20 umgreift bzw. in Draufsicht (Fig. 2) auf der Außenseite des Kettenblatts 20 angeordnet ist.

Das Abdeckelement 10 kann ferner derart ausgebildet sein, dass es eine Unterseite 34 der Kettenstrebe 14 zumindest teilweise umgreift, um eine sichere zuverlässige Verbindung mit der Kettenstrebe 14 zu gewährleisten.

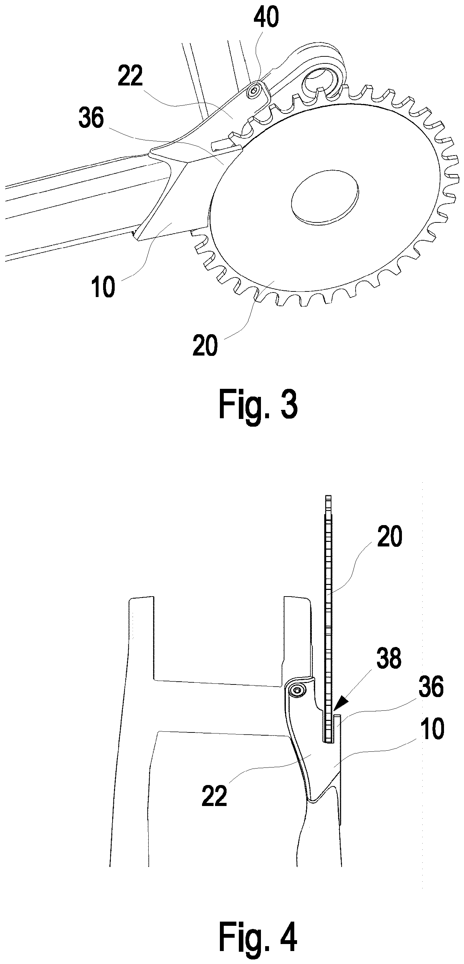

Bei einer zweiten bevorzugten Ausführungsform (Fig. 3 und 4) sind ähnliche und identische Bauteile mit denselben Bezugszeichen gekennzeichnet.

Der wesentliche Unterschied der beiden Ausführungsformen besteht darin, dass das Abdeckelement 10 zusätzlich einen Ansatz 36 aufweist. Durch den Ansatz 36 ist im dargestellten Ausführungsbeispiel eine Nut 38 ausgebildet, in der die Zähne des Kettenblatts 20 angeordnet sind. Der Ansatz 36 ist somit in montiertem Zustand in Draufsicht vor bzw. außerhalb des Kettenblatts 20 angeordnet. Die Befestigung erfolgt im dargestellten Ausführungsbeispiel vorzugsweise wiederum über ein Befestigungselement 22, das im dargestellten Ausführungsbeispiel eine Schraube 40 aufweist.

Die in den Figuren 3 und 4 dargestellten Ausführungsform kann selbstverständlich dahingehend ergänzt werden, dass diese zusätzlich ein Kettenführungselement 24 und/oder ein Schutzelement 30 aufweist.

## Patentansprüche

1. Kettenstreben-Schutzelement zur Anordnung an einer Kettenstrebe (14) eines Fahrrads, mit
einem Abdeckelement (10), das in montiertem Zustand an einer Außenseite (12) der Kettenstrebe (14) im Bereich (16) eines Kettenblattes (20) angeordnet ist und
einem mit dem Abdeckelement verbundenen Befestigungselement zum Befestigen an der Kettenstrebe (14)
**dadurch gekennzeichnet,**
**dass** das Abdeckelement (10) einen Ansatz (36) aufweist, der in montiertem Zustand das Kettenblatt (20) umgreift und/oder
**dass** das Abdeckelement (10) eine Nut (38) aufweist, in der in montiertem Zustand die Zähne des Kettenblatts (20) angeordnet sind.

2. Kettenstreben-Schutzelement zur Anordnung an einer Kettenstrebe nach Anspruch 1, **dadurch gekennzeichnet, dass** der abgedeckte Bereich (16) den unmittelbar an das Kettenblatt (20) angrenzenden Bereich des Kettenblatts (20) einschließt.

3. Kettenstreben-Schutzelement zur Anordnung an einer Kettenstrebe nach Anspruch 1 oder 2, **dadurch gekennzeichnet, dass** der abgedeckte Bereich (16) einen in Draufsicht hinter dem Kettenblatt (20) insbesondere den Zähnen des Kettenblatts (20) angeordneten Bereich einschließt.

4. Kettenstreben-Schutzelement zur Anordnung an einer Kettenstrebe nach Anspruch 1 bis 3, **dadurch gekennzeichnet, dass** das Abdeckelement (10) bogenförmig, insbesondere kreisbogenförmig ausgebildet ist, wobei das Abdeckelement (10) vorzugsweise im Wesentlichen koaxial zum Kettenblatt (20) angeordnet ist.

5. Kettenstreben-Schutzelement zur Anordnung an einer Kettenstrebe nach Anspruch 1 bis 4, **dadurch gekennzeichnet, dass** sich das Abdeckelement (10) über die gesamte Höhe der Außenseite (12) der Kettenstrebe (14) erstreckt.

6. Kettenstreben-Schutzelement zur Anordnung an einer Kettenstrebe nach Anspruch 1 bis 5, **dadurch gekennzeichnet, dass** das Abdeckelement (10) eine Unterseite der Kettenstrebe (14) zumindest teilweise umgreift.

7. Kettenstreben-Schutzelement zur Anordnung an einer Kettenstrebe nach Anspruch 1 bis 6, **dadurch gekennzeichnet, dass** das Befestigungselement (22) an einer Oberseite der Kettenstrebe (14) angeordnet ist.

8. Kettenstreben-Schutzelement zur Anordnung an einer Kettenstrebe nach Anspruch 1 bis 7, **dadurch gekennzeichnet, dass** das Befestigungselement (22) in unterschiedlichen Positionen mit der Kettenstrebe (14) insbesondere der Oberseite der Kettenstrebe (14) verbindbar ist.

9. Kettenstreben-Schutzelement zur Anordnung an einer Kettenstrebe nach Anspruch 1 bis 8, **dadurch gekennzeichnet, dass** das Abdeckelement (10) und/oder das Befestigungselement (22) mit einem auf einer Oberseite der Kettenstrebe (14) angeordneten Schutzelement (30) verbunden ist, das sich in Richtung eines Ausfallendes (32) der Kettenstrebe (14) erstreckt.

10. Kettenstreben-Schutzelement zur Anordnung an einer Kettenstrebe nach Anspruch 1 bis 9, **dadurch gekennzeichnet, dass** das Befestigungselement (22) und/oder das Abdeckelement (10) mit einem Kettenführungselement (24) verbunden ist.

11. Kettenstreben-Schutzelement zur Anordnung an einer Kettenstrebe nach Anspruch 10, **dadurch gekennzeichnet, dass** das Kettenführungselement (24) in unterschiedlichen Positionen befestigbar ist.

12. Kettenstreben-System mit
einer Kettenstrebe (14) eines Fahrrad-Hinterbaus und
einem mit der Kettenstrebe (14) verbundenen Kettenstreben-Schutzelement nach einem der Ansprüche 1 bis 11.

## Claims

1. A chain stay protection element for arrangement on a chain stay (14) of a bicycle, comprising
a cover element (10) arranged on an outer side (12) of the chain stay (14) in the area (16) of a chainring (20) in the mounted state, and
a fastening element connected to the cover element for fastening to the chain stay (14),
**characterized in that**
the cover element (10) has a lug (36) encompassing the chainring (20) in the mounted state and/or
the cover element (10) has a groove (38) in which the teeth of the chainring (20) are arranged in the mounted state.

2. The chain stay protection element for arrangement on a chain stay according to claim 1, **characterized in that** the covered area (16) includes the area of the chainring (20) directly adjacent to the chainring (20).

3. The chain stay protection element for arrangement on a chain stay according to claim 1 or 2, **characterized in that** the covered area (16) includes an area arranged behind the chainring (20), in particular the teeth of the chainring (20), in plan view.

4. The chain stay protection element for arrangement on a chain stay according to claims 1 to 3, **characterized in that** the cover element (10) is configured to be arc-shaped, in particular circular arc-shaped, the cover element (10) preferably being arranged substantially coaxially to the chainring (20).

5. The chain stay protection element for arrangement on a chain stay according to claims 1 to 4, **characterized in that** the cover element (10) extends across the entire height of the outer side (12) of the chain stay (14).

6. The chain stay protection element for arrangement on a chain stay according to claims 1 to 5, **characterized in that** the cover element (10) at least partially encompasses a lower side of the chain stay (14).

7. The chain stay protection element for arrangement on a chain stay according to claims 1 to 6, **characterized in that** the fastening element (22) is arranged on an upper side of the chain stay (14).

8. The chain stay protection element for arrangement on a chain stay according to claims 1 to 7, **characterized in that** the fastening element (22) is adapted to be connected in different positions to the chain stay (14), in particular the upper side of the chain stay (14).

9. The chain stay protection element for arrangement on a chain stay according to claims 1 to 8, **characterized in that** the cover element (10) and/or the fastening element (22) are connected to a protection element (30) arranged on an upper side of the chain stay (14), said protection element (30) extending in the direction of a fork end (32) of the chain stay (14).

10. The chain stay protection element for arrangement on a chain stay according to claims 1 to 9, **characterized in that** the fastening element (22) and/or the cover element (10) is connected to a chain guide element (24).

11. The chain stay protection element for arrangement on a chain stay according to claim 10, **characterized in that** the chain guide element (24) is adapted to be fastened in different positions.

12. A chain stay system, comprising
a chain stay (14) of a bicycle rear frame, and
a chain stay protection element according to any one of claims 1 to 11 connected to the chain stay (14).

## Revendications

1. Elément de protection d'entretoise de chaîne destiné à être disposé à une entretoise de chaîne (14) d'une bicyclette, avec
un élément de couverture (10) qui, en l'état monté, est disposé sur une face extérieure (12) de l'entretoise de chaîne (14) dans une zone d'un plateau (20) et
un élément de fixation attaché à l'élément de couverture et destiné à la fixation à l'entretoise de chaîne (14),
**caractérisé en ce**
**que** l'élément de couverture (10) comprend une extension (36) qui, en l'état monté, entoure le plateau (20) et/ou
**que** l'élément de couverture (10) est pourvu d'une rainure (38) dans laquelle, en l'état monté, les dents du plateau (20) sont disposées.

2. Elément de protection d'entretoise de chaîne destiné à être disposé à une entretoise de chaîne selon la revendication 1, **caractérisé en ce que** la zone couverte (16) comprend la zone du plateau (20) directement adjacente au plateau (20).

3. Elément de protection d'entretoise de chaîne destiné à être disposé à une entretoise de chaîne selon la revendication 1 ou 2, **caractérisé en ce que** la zone couverte (16) comprend une zone disposée, en vue de dessus, derrière le plateau (20), notamment derrière les dents du plateau (20).

4. Elément de protection d'entretoise de chaîne destiné à être disposé à une entretoise de chaîne selon l'une des revendications 1 à 3, **caractérisé en ce que** l'élément de couverture (10) est réalisé en forme d'arc, notamment en forme d'arc de cercle, l'élément de couverture (10) étant disposé de préférence sensiblement coaxialement au plateau (20).

5. Elément de protection d'entretoise de chaîne destiné à être disposé à une entretoise de chaîne selon l'une des revendications 1 à 4, **caractérisé en ce que** l'élément de couverture (10) s'étend sur la hauteur totale de la face extérieure (12) de l'entretoise de chaîne (14).

6. Elément de protection d'entretoise de chaîne destiné à être disposé à une entretoise de chaîne selon l'une des revendications 1 à 5, **caractérisé en ce que** l'élément de couverture (10) entoure au moins partiellement une face inférieure de l'entretoise de chaîne (14).

7. Elément de protection d'entretoise de chaîne destiné à être disposé à une entretoise de chaîne selon l'une des revendications 1 à 6, **caractérisé en ce que** l'élément de fixation (22) est disposé sur une face supérieure de l'entretoise de chaîne (14).

8. Elément de protection d'entretoise de chaîne destiné à être disposé à une entretoise de chaîne selon l'une des revendications 1 à 7, **caractérisé en ce que** l'élément de fixation (22) peut être attaché à l'entretoise de chaîne (14), notamment à la face supérieure de l'entretoise de chaîne (14), dans différentes positions.

9. Elément de protection d'entretoise de chaîne destiné à être disposé à une entretoise de chaîne selon l'une des revendications 1 à 8, **caractérisé en ce que** l'élément de couverture (10) et/ou l'élément de fixation (22) est attaché à un élément de protection (30) disposé sur une face supérieure de l'entretoise de chaîne (14) et s'étendant en direction d'une extrémité (32) de l'entretoise de chaîne (14).

10. Elément de protection d'entretoise de chaîne destiné à être disposé à une entretoise de chaîne selon l'une des revendications 1 à 9, **caractérisé en ce que** l'élément de fixation (22) et/ou l'élément de couverture (10) est attaché à un élément de guidage de chaîne (24).

11. Elément de protection d'entretoise de chaîne destiné à être disposé à une entretoise de chaîne selon la revendication 10, **caractérisé en ce que** l'élément de guidage de chaîne (24) peut être disposé dans différentes positions.

12. Système d'entretoise de chaîne avec
une entretoise de chaîne (14) d'une partie arrière d'une bicyclette et
un élément de protection d'entretoise de chaîne selon l'une des revendications 1 à 11 relié à l'entretoise de chaîne (14).
